Europäisches Patentamt

European Patent Office

Office européen des brevets

(19)

(11) Numéro de publication : **0 112 749**
**B1**

(12) **FASCICULE DE BREVET EUROPÉEN**

(45) Date de publication du fascicule du brevet :
**07.05.86**

(51) Int. Cl.⁴ : **F 16 D 55/22**

(21) Numéro de dépôt : **83402308.7**

(22) Date de dépôt : **30.11.83**

(54) **Ensemble d'un élément de friction équipé d'un ressort anti-bruit pour frein à disque.**

(30) Priorité : **23.12.82 FR 8221684**

(43) Date de publication de la demande :
**04.07.84 Bulletin 84/27**

(45) Mention de la délivrance du brevet :
**07.05.86 Bulletin 86/19**

(84) Etats contractants désignés :
**DE FR GB IT NL SE**

(56) Documents cités :
**EP-A- 0 080 949**
**DE-A- 2 522 625**
**FR-A- 2 311 965**
**FR-A- 2 325 298**
**FR-A- 2 378 209**

(73) Titulaire : **BENDIX France**
**126, rue de Stalingrad**
**F-93700 Drancy (FR)**

(72) Inventeur : **Gérard, Jean-Louis**
**129 Boulevard Masséna**
**F-75013 Paris (FR)**

(74) Mandataire : **Le Moenner, Gabriel et al**
**SERVICE BREVETS BENDIX 44, Rue François 1er**
**F-75008 Paris (FR)**

## Description

La présente invention concerne les éléments de friction pour frein à disque et, plus particulièrement, un ensemble d'un élément de friction équipé d'un ressort anti-bruit.

La présente invention se rapporte plus spécifiquement à un ensemble d'un élément de friction équipé d'un ressort anti-bruit, ledit élément de friction comprenant une plaque porte-garniture destinée à coopérer en ancrage et à coulissement avec des surfaces de guidage d'un organe support de couple d'un frein à disque au moyen d'encoches formées sur les bords latéraux de la plaque, celle-ci comportant, au niveau d'au moins une de ces encoches, une ouverture formée dans le bord transversal adjacent pour le montage du ressort anti-bruit, cette ouverture et l'encoche adjacente formant une partie de col prolongée vers l'extérieur par une partie de pattes évasée, le ressort étant formé d'un fil élastique et présentant une partie d'extrémité en forme de boucle fermée destinée à être engagée autour de la partie de col de la plaque pour normalement porter en appui, par sa partie centrale, contre une zone d'appui de l'ouverture, la boucle étant prolongée par un brin pourvu, à son extrémité opposée à la boucle, de moyens de montage sur la zone centrale de la plaque porte-garniture.

Un tel ensemble est décrit dans la demande de brevet européen EP-A-0 080 949 du 29 novembre 1982, au nom de la demanderesse, dont le contenu est supposé intégré ici pour référence. Ce document décrit, notamment en relation avec les modes de réalisation des figures 1 à 7, un élément de friction sur lequel le ressort, du type défini ci-dessus, est maintenu en place par une pince formée à l'extrémité du brin et engagée à friction sur le bord transversal supérieur de la plaque support de garniture. Cet agencement présente toutefois des risques d'échappement de la pince lors des opérations de transport ou de montage de l'ensemble équipé pouvant entraîner un endommagement du ressort. De plus, le blocage par pincement du ressort ne garantit pas que la boucle du ressort occupe, vis-à-vis de la partie de col qu'elle entoure, la position requise pour le montage de l'élément équipé dans un frein à disque.

La présente invention a précisément pour objet de proposer un agencement combiné d'un élément de friction et d'un ressort anti-bruit de configuration simple, de faibles coûts de fabrication, de manipulation aisée, permettant de rendre le ressort imperdable tout en assurant son positionnement correct sur l'élément de friction en vue de son montage dans un frein à disque.

Pour ce faire, selon une caractéristique de l'invention, la plaque support de garniture comporte, au niveau de sa zone centrale, un orifice traversant dans lequel est reçue l'extrémité coudée transversalement du brin du ressort.

Selon une autre caractéristique de l'invention, la longueur du brin est supérieure à la distance entre l'orifice et l'extrémité adjacente de la partie de pattes évasée limitant l'ouverture de montage du ressort sur la plaque support et inférieure à la distance entre l'orifice et le fond de l'ouverture de montage.

Cet agencement, outre les avantages sus-mentionnés, permet de rendre le ressort solidaire de l'élément de friction sans subir de contrainte ni donc de fatigue, en attente de montage sur un frein.

D'autres caractéristiques et avantages de la présente invention ressortiront de la description suivante d'un mode de réalisation, donné à titre illustratif mais nullement limitatif, faite en relation avec les dessins annexés, sur lesquels :

la figure 1 est une vue de dessus d'un frein à disque pourvu d'ensembles d'éléments de friction équipés selon l'invention ;

la figure 2 est une vue de face, du côté intérieur, du frein de la figure 1 ;

la figure 3 est une vue de face d'un élément de friction selon l'invention ;

la figure 4 est une vue schématique de côté d'un ressort anti-bruit selon l'invention ; et

les figures 5 à 9 représentent les étapes de montage du ressort anti-bruit de la figure 4 sur l'élément de friction de la figure 3.

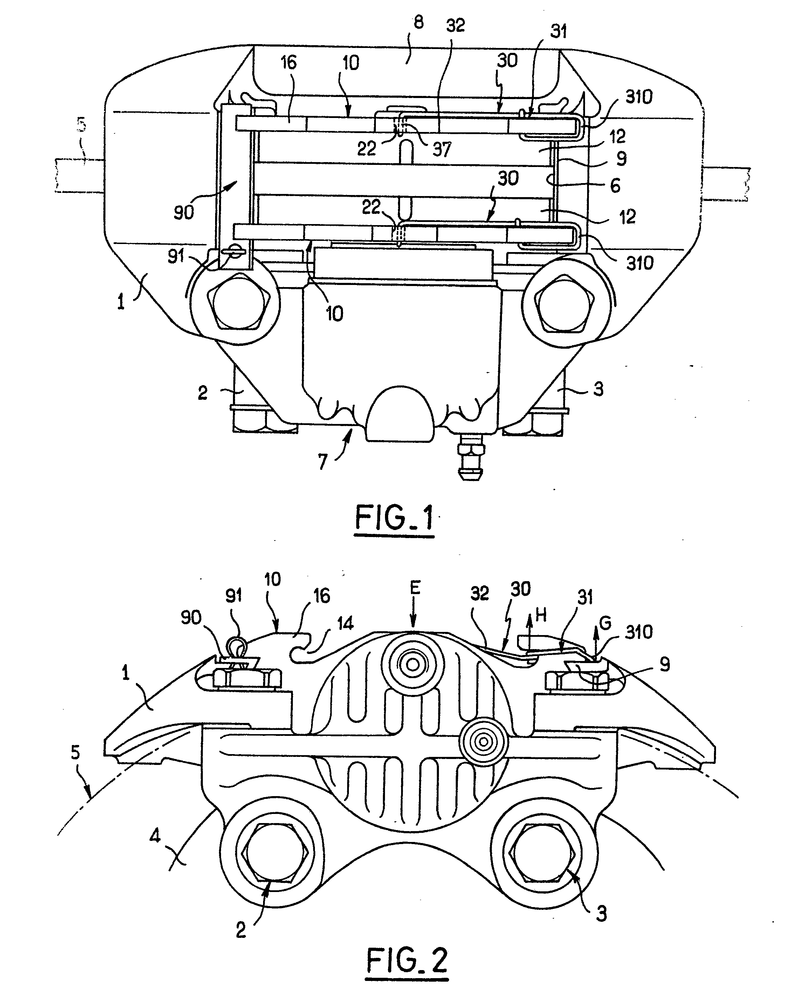

On a représenté sur les figures 1 et 2, à titre d'exemple, un frein à disque auquel s'appliquent les ensembles combinés d'éléments de friction selon l'invention. Ce frein est du type comportant un étrier 1 monté coulissant, par l'intermédiaire de deux colonnettes axiales 2 et 3 sur un support fixe, schématisé en 4, prévu pour être fixé sur une partie stationnaire d'un véhicule (non représentée), l'étrier 1 chevauchant un disque tournant 5 prévu pour être associé à une roue du véhicule. L'étrier 1 comporte, dans sa partie chevauchant le disque, une ouverture 6 délimitée par des bords diédriques latéraux s'étendant axialement jouant le rôle d'organe support de couple pour une paire d'éléments de friction 10 disposés de part et d'autre du disque 5. L'élément de friction intérieur est actionné directement par le piston d'un moteur de frein 7 associé à l'étrier 1, l'élément de friction extérieur étant actionné par réaction contre le disque via la partie de réaction extérieure 8 de l'étrier. Comme on le voit sur la figure 2, les éléments de friction 10 sont reçus en ancrage et en coulissement sur les bords en regard profilés en forme de coin 9 de l'ouverture 6, l'un de ces bords (le bord gauche sur les figures 1 et 2) comportant une clavette axiale 90 interposée entre ce bord et le bord latéral correspondant des éléments de friction 10, et verrouillée par une épingle 91, cette clavette 90 permettant l'extraction radiale des éléments de friction 10 lorsque cette clavette est extraite axialement du frein.

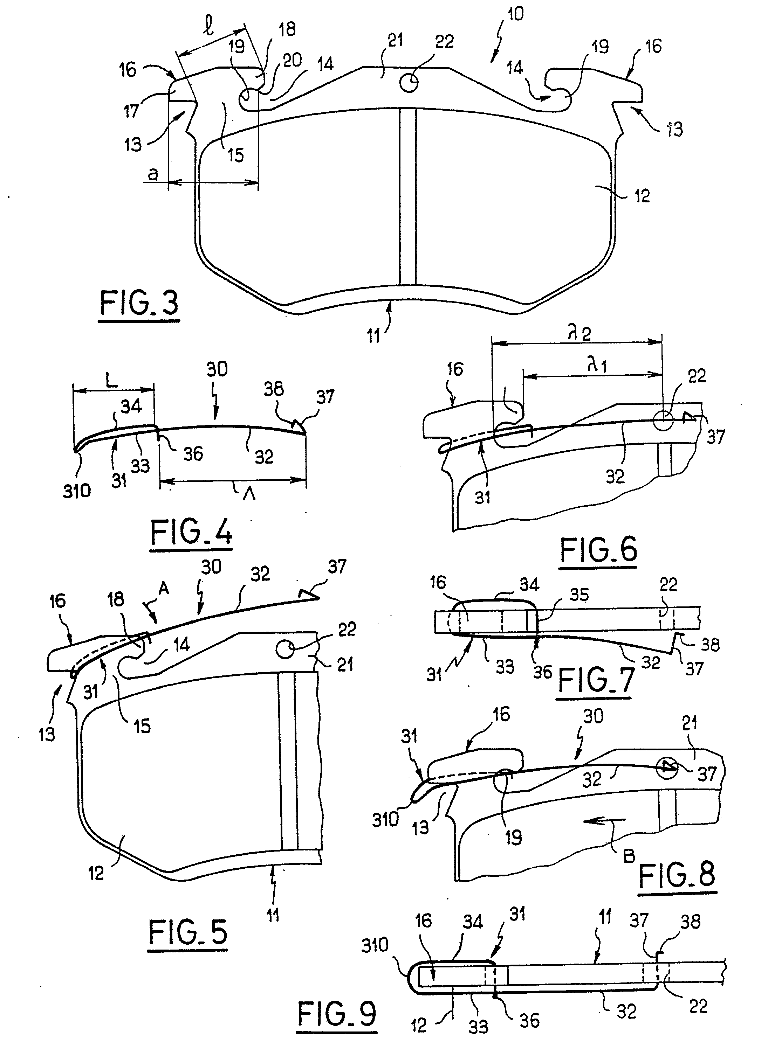

Comme on le voit bien sur la figure 3, les éléments de friction 10 sont constitués d'une plaque support de garniture 11 sur laquelle est fixée, par exemple par collage, une garniture de friction 12 ; les bords latéraux de l'élément de friction 10 sont formés, au voisinage de leur extrémité radiale supérieure, avec des encoches en forme de V 13 de profil correspondant à celui des bords 9 et de la clavette 90 sus-mentionnée. Au voisinage d'au moins une de ces encoches 13, la plaque 11 comporte, dans son bord supérieur transversal, une ouverture de montage du ressort 14, l'ouverture 14 et l'encoche 14 définissant une partie de col de largeur réduite 15 formant embase pour une partie de pattes évasée 16 comportant deux bras latéraux opposés 17 et 18. Le bras 17 définit l'arête supérieure de l'encoche 13 tandis que le bras latéral 18 est conformé pour ménager, au fond de l'ouverture 14, une zone d'appui 19 à profil sensiblement cylindrique avec un bord ou arête en saillie 20 fermant partiellement cette zone d'appui 19. La zone centrale en surélévation 21 de la plaque 11 entre les deux ouvertures de montage 14 est pourvue au voisinage du bord supérieur avec un orifice traversant 22 par exemple situé dans le plan de symétrie de l'élément de friction 10.

Comme on le voit sur la figure 4, le ressort anti-bruit 30 selon l'invention, réalisé à partir d'un fil métallique élastique, comprend une partie d'extrémité 31 en forme de boucle de profil, en vue de dessus, sensiblement rectangulaire (comme on le voit sur les figures 7 et 9), prolongée par un brin de ressort 32. Comme on le voit sur la figure 9, en configuration de repos, en vue de dessus, le brin 32 est prolongé linéairement pour constituer un premier côté 33 de la boucle 31, l'autre côté 34 de la boucle s'étendant sensiblement parallèlement au premier côté 33 pour se prolonger par un côté de fermeture transversal 35 dont l'extrémité 36 est rabattue pour fermer la boucle autour du brin 32-33. L'extrémité de la boucle 31 opposée au brin 32 est légèrement rabattue angulairement vers le bas pour constituer un bec 310 destiné à venir porter, en configuration de montage, sur la face supérieure du bord latéral intérieur 9 de l'étrier, comme on le voit sur les figures 1 et 2.

Conformément à l'invention, la longueur intérieure axiale L de la bouche 31 est supérieure à la distance l correspondant au cercle centré au fond de l'encoche 13 et tangeant extérieurement à la patte latérale 18, cette longueur L étant par contre inférieure à la distance a entre l'arête intérieure 20 de la patte 18 et l'extrémité extérieure de la patte 17. L'extrémité du brin 32 opposée à la boucle 31 forme un premier tronçon coudé transversalement 37 s'étendant perpendiculairement au brin 32 dans la direction vers le côté 34 de la boucle 31, ce premier tronçon coudé 37 étant lui-même terminé par un second tronçon coudé 38 s'étendant perpendiculairement au tronçon 37 et au plan général de la boucle 31. La largeur transversale intérieure de la boucle 31 et la longueur du premier tronçon 37 sont supérieures à l'épaisseur de la plaque support de garniture 11 de l'élément de friction 10. Comme on le voit sur la figure 6, la longueur $\Lambda$ du brin 32,

entre la partie de boucle 31 et son extrémité coudée 37, est supérieure à la distance $\lambda 1$ entre l'axe de l'orifice 22 et l'extrémité adjacente de la patte 18 délimitant partiellement l'ouverture 14 et inférieure à la distance $\lambda 2$ entre l'axe de l'orifice 22 et le fond de la zone d'appui 19 délimitant latéralement la partie de col 15.

La procédure de montage et la mise en place du ressort 30 sur l'élément de friction 10 est détaillée successivement sur les figures 5 à 9. Le ressort 30 est tout d'abord présenté au-dessus de la partie de pattes évasée 16 pour engager le bec 310 dans l'encoche 13. Le bec 310 est amené dans le fond de l'encoche 13 puis l'ensemble du ressort est basculé dans le sens de la flèche A sur la figure 5 de façon que la boucle 31 franchisse la patte 18 et parvienne dans l'ouverture de montage 14 pour aboutir à la configuration représentée sur la figure 6. Dans cette configuration, l'extrémité coudée 37 du brin 32 est située au-delà de l'orifice 22 dans la direction opposée à la partie de pattes 16 et le brin 32 se trouve momentanément fléchi latéralement, comme illustré sur la figure 7, du fait de la venue en appui de l'extrémité coudée 38 du bras 32 sur la face adjacente de la plaque porte-garniture 11.

A partir de cette position, l'ensemble du ressort 30 est déplacé dans la direction vers la partie de pattes 16, comme figuré par la flèche B sur la figure 8, pour amener le côté de fermeture transversal 35 de la boucle 31 dans la partie d'appui 19 de l'ouverture 14 et, concomitamment, l'extrémité coudée 37 du brin 32 en regard de l'orifice 22, le bec 310 étant, pour sa part, dégagé de l'encoche 13. Etant venue en regard de l'orifice 22, l'extrémité coudée du brin 32 pénètre dans cette dernière de façon que l'extrémité 38 dépasse sur l'autre face de la plaque 11 dans la position finale de montage représentée sur la figure 9, avec le brin 32 et sa prolongation 33 s'étendant parallèlement au plan de la face adjacente de la plaque 11, le ressort 30 étant verrouillé en position de fonctionnement sur la plaque 11.

En faisant de nouveau référence aux figures 1 et 2, lorsque les éléments de friction 10, équipés du ressort 30, sont mis en place dans le frein, dans cette configuration de montage sur le frein, la partie de boucle 31 prend un appui, figuré par la flèche H sur la figure 2, par son côté de fermeture transversal 35, contre le fond supérieur de la zone d'appui 19 tandis que la boucle 31, par son bec d'extrémité 310, est sollicitée élastiquement vers le haut, le bec 310 portant en appui élastique, comme figuré par la flèche G sur la figure 2, sur la face supérieure du bord latéral 9 de l'étrier, l'extrémité coudée 37 prenant appui inverse, comme figuré par la flèche E sur la figure 2, dans l'orifice 22, le ressort 30 coopérant ainsi avec l'élément de friction et avec le support de couple pour maintenir plaqué en engagement l'élément de friction sur l'élément support de couple et éviter ainsi les bruits qui résulteraient du déplacement relatif entre ces deux composants. Comme on le voit sur les figures 4 et 5, le ressort 30 présente avantageusement, en vue de côté, au repos, une forme arquée pour garantir une sollicitation efficace de l'élément de friction en configuration de montage dans le frein. Dans cette même configuration de repos, les tronçons transversaux 35 et 37 du ressort sont dimensionnés de façon que l'extrémité coudée 38 du brin 32 soit sensiblement coplanaire avec le côté 34 de la boucle 31 opposé au brin 32.

Quoique la présente invention ait été décrite en relation avec un mode de réalisation particulier, elle ne s'en trouve pas limitée mais est au contraire susceptible de modifications et de variantes qui apparaîtront à l'homme de l'art.

## Revendications

1. Ensemble d'un élément de friction équipé d'un ressort anti-bruit, l'élément de friction (10) comprenant une plaque porte-garniture (11) destinée à coopérer en ancrage et à coulissement avec des surfaces de guidage diédriques (9, 90) d'un organe support de couple (1) d'un frein à disque au moyen d'encoches (13) formées dans les bords latéraux de la plaque support, celle-ci comportant, au niveau d'au moins une de ces encoches (13), une ouverture (14) formée dans le bord transversal adjacent pour le montage du ressort anti-bruit (30), cette ouverture (14) et l'encoche (13) adjacente formant une partie de col (15) prolongée vers l'extérieur par une partie de pattes évasée (16), le ressort (30) étant formé d'un fil élastique et présentant une partie d'extrémité (31) en forme de boucle fermée destinée à être engagée autour de la partie de col (15) pour normalement porter en appui, par sa partie centrale (35), contre une zone d'appui (19) de l'ouverture (14), la boucle (31) étant prolongée par un brin (32) pourvu à son extrémité opposée à la boucle de moyens de montage (37, 38) sur la zone centrale (21) de la plaque support de garniture (11), caractérisé en ce que la plaque support de garniture (11) comporte, au niveau de sa zone centrale (21), un orifice traversant (22) dans lequel est reçue l'extrémité coudée transversalement (37) du brin (32) du ressort (30).

2. Ensemble selon la revendication 1, caractérisé en ce que la longueur ($\Lambda$) du brin (32) est supérieure à la distance ($\lambda$1) entre l'orifice (22) et l'extrémité adjacente (18) de la partie de patte (16) limitant l'ouverture (14) de montage du ressort.

3. Ensemble selon la revendication 2, caractérisé en ce que la longueur ($\Lambda$) du brin (32) est inférieure à la distance ($\lambda$2) entre l'orifice (22) et le fond de l'ouverture (14) délimitant latéralement la partie de col (15).

4. Ensemble selon l'une des revendications 1 à 3, caractérisé en ce que l'extrémité du brin opposée à la boucle (31) forme un premier tronçon coudé transversal (37), normalement reçu dans l'orifice (22) de la plaque (11), et un second tronçon coudé terminal (38) orthogonal, disposé normalement du côté de la plaque (11) opposé à celui le long duquel s'étend le brin (32).

5. Ensemble selon la revendication 4, caractérisé en ce que, au repos, le second tronçon coudé terminé (38) est sensiblement coplanaire avec le côté (34) de la boucle (31) opposé au brin (32).

## Claims

1. A friction member assembly provided with an antirattle spring, the friction member (10) comprising a support plate (11) adapted to holdingly and slidingly cooperate with V-shaped guide surfaces (9, 90) of a torque support member (1) of a disc brake by means of notches (13) provided in the lateral edges of the support plate, the latter comprising at the level of at least one of these notches (13) an opening (14) provided in the adjacent transverse edge for mounting of the antirattle spring (13), said opening (14) and the adjacent notch (13) forming a neck portion (15) outwardly prolongated by an enlarged claw portion (16), the spring (13) being made from a resilient wire and presenting an end portion (31) shaped as a closed loop adapted to be engaged around the neck portion (15) for normally engaging via its central portion (35) an engagement area (19) of the opening (14), the loop (31) being prolongated by a wire portion (32) provided at its end opposite to the loop with mounting means (37, 38) for mounting on the central portion (21) of the support plate (11), characterized in that the support plate (11) comprises at the level of its central portion (21) a transverse orifice (22) receiving the transversely bent extremity (37) of the wire portion (32) of the spring (30).

2. The assembly of claim 1, characterized in that the length ($\Lambda$) of the wire portion (32) is greater than the distance ($\lambda$1) between the orifice (22) and the adjacent extremity (18) of the claw portion (16) limiting the spring mounting opening (14).

3. The assembly of claim 2, characterized in that the length ($\Lambda$) of the wire portion (32) is smaller than the distance ($\lambda$2) between the orifice (22) and the bottom of the opening (14) laterally delimiting the neck portion (15).

4. The assembly of any of claims 1 to 3, characterized in that the end of the wire portion opposite the loop (31) forms a transverse first bent portion (37) normally received in the orifice (22) of the support plate (11), and an orthogonal terminal second bent portion (38) normally disposed at the side of the support plate (11) opposite to that along which the wire portion (32) extends.

5. The assembly of claim 4, characterized in that, at rest, the terminal second bent portion (38) is substantially coplanar with the side (34) of the loop (31) opposite to the wire portion (32).

## Patentansprüche

1. Bremsbackenanordnung, die mit einer Antiratterfeder versehen ist, wobei der Bremsbacken (10) eine Belagträgerplatte (11) aufweist, die unter gleitender Führung mit V-förmigen Führungsflächen (9, 90) eines das Bremsmoment aufnehmenden Bauteiles (1) einer Scheibenbremse mittels Einkerbungen (13) in den Seitenrändern der Belagträgerplatte zusammenwirkt, wobei die Belagträgerplatte auf Höhe mindestens einer der Einkerbungen (13) eine im angrenzenden quer verlaufenden Rand gebildete Öffnung (14) für die Halterung der Antiratterfeder (30) aufweist, wobei diese Öffnung (14) und die angrenzende Einkerbung (13) einen Halsabschnitt (15) bilden, der nach außen von einem erweiterten Klauenabschnitt (16) verlängert wird, wobei die Feder (30) aus einem elastischen Draht hergestellt ist und einen Endabschnitt (31) in Form einer geschlossenen Schleife aufweist, der um den Halsabschnitt (15) greift, um normalerweise mit seinem zentralen Abschnitt (35) an einem Anlagebereich (19) der Öffnung (14) anzugreifen, wobei die Schleife (31) von einem Drahtstück (32) verlängert wird, das an seinem der Schleife entgegengesetzten Ende Halterungsmittel (37, 38) zur Befestigung am zentralen Bereich (21) der Belagträgerplatte (11) versehen ist, dadurch gekennzeichnet, daß die Belagträgerplatte (11) auf Höhe ihres zentralen Bereichs (21) eine Querbohrung (22) aufweist, in die das in Querrichtung abgegobene Ende (37) des Drahtstücks (32) der Feder (30) greift.

2. Anordnung nach Anspruch 1, dadurch gekennzeichnet, daß die Länge ($\Lambda$) des Drahtstücks (32) größer ist als der Abstand ($\lambda 1$) zwischen der Querbohrung (22) und dem angrenzenden Ende (18) des Klauenabschnitts (16) ist, der die Öffnung (14) zur Halterung der Feder begrenzt.

3. Anordnung nach Anspruch 2, dadurch gekennzeichnet, daß die Länge ($\Lambda$) des Drahtstücks (32) kleiner ist als der Abstand ($\lambda 2$) zwischen der Querbohrung (22) und dem Boden der Öffnung (14), der den Halsabschnitt (15) seitlich begrenzt.

4. Anordnung nach einem der Ansprüche 1-3, dadurch gekennzeichnet, daß das der Schleife (31) gegenüberliegende Ende des Drahtstücks ein transversales erstes abgebogenes Teil (37) und ein orthogonales abgebogenes zweites (End-) Teil (38) aufweist, von denen das erste Teil (37) normalerweise in der Querbohrung (22) der Belagträgerplatte (11) sitzt und das zweite Teil normalerweise auf derjenigen Seite der Belagträgerplatte (11) angeordnet ist, die derjenigen gegenüberliegt, entlang welcher sich das Drahtstück (32) erstreckt.

5. Anordnung nach Anspruch 4, dadurch gekennzeichnet, daß in der Ruhestellung das zweite abgebogene Teil (38) im wesentlichen koplanar zu der dem Drahtstück (32) gegenüberliegenden Seite (34) der Schleife (31) verläuft.

0 112 749

FIG.1

FIG.2

1

**0 112 749**

FIG.3

FIG.4

FIG.6

FIG.5

FIG.7

FIG.8

FIG.9

2